# EUROPEAN PATENT APPLICATION

(11) **EP 3 506 213 A1**
(43) Date of publication of application: **03.07.2019**
(21) Application number: 17210926.6
(22) Date of filing: 28.12.2017
(51) Int. Cl.: G06T 19/00, G06T 7/246

(54) **AN APPARATUS AND ASSOCIATED METHODS FOR PRESENTATION OF AUGMENTED REALITY CONTENT**

(71) Applicant: Nokia Technologies Oy, 02610 Espoo (FI)
(72) Inventor: ERONEN,, Antti Johannes, 33820 Tampere (FI); ROIMELA,, Kimmo Tapio, 33710 Tampere (FI); LEPPÄNEN,, Jussi Artturi, 33580 Tampere (FI); LEHTINIEMI,, Arto Juhani, 33880 Lempäälä (FI)
(74) Representative: Potter Clarkson

(57) **Abstract**

An apparatus, based on first tracking information comprising one or more location data points determined based on the location of one or more visual features in first-camera captured visual imagery of a real-world scene obtained prior to a temporal interruption, the first tracking information provided for generation of an augmented reality scene; and based on second tracking information comprising at least an indication of changes, during the temporal interruption, in one or more of location and appearance in the real-world scene of at least a subset of the one or more visual features in second-camera captured visual imagery;
configured to provide for determination of updated first tracking information having updated location data points based on the changes indicated in the second tracking information for use in generation of the augmented reality scene based on the first and second tracking information.

## Description

### Technical Field

The present disclosure relates to the field of presentation of augmented reality content. In particular, it is related to the tracking of features in a real-world scene to enable the presentation of augmented reality content to appear at locations in said scene, associated apparatus, methods and computer programs.

### Background

The presentation of augmented reality may require the location of features, such as objects, in the real-world to be tracked so that augmented reality content may be presented such that they appear alongside real-world objects or in a specific location or orientation relative to real-world objects. However, providing for effective tracking of a real-world scene may be difficult.

The listing or discussion of a prior-published document or any background in this specification should not necessarily be taken as an acknowledgement that the document or background is part of the state of the art or is common general knowledge. One or more aspects/examples of the present disclosure may or may not address one or more of the background issues.

### Summary

An apparatus comprising means configured to perform the following:
based on first tracking information comprising one or more location data points determined based on the location of one or more visual features in captured visual imagery of a real-world scene obtained prior to a temporal interruption in the determination of the first real-world tracking information, the captured visual imagery captured by a first camera, the first tracking information provided for generation of an augmented reality scene; and
based on second tracking information comprising at least an indication of changes, during the temporal interruption, in one or more of location and appearance of at least a subset of the one or more visual features in captured visual imagery of said real-world scene from a second camera, different to the first camera;
provide for determination of updated first tracking information having updated location data points based on the first tracking information and the changes indicated in the second tracking information for use in generation of the augmented reality scene.

In one or more examples, the apparatus comprises means configured, based on signalling indicative of the onset of the temporal interruption, to provide for initiation of tracking of said changes from the captured visual imagery of the second camera in order to provide the second tracking information.

In one or more examples, the apparatus comprises means configured to provide visual feature information that identifies at least the subset of visual features in the captured visual imagery of a real-world scene captured by the first camera, for use in generation of the second tracking information using the captured visual imagery of the second camera.

In one or more examples, based on augmented reality content comprising at least visual content, and the first tracking information, the apparatus comprises means configured to provide for presentation, prior to said temporal interruption, of said augmented reality scene comprising said visual imagery presented at a location defined relative to said one or more location data points, and subsequent to said temporal interruption, provide for presentation of said visual imagery of said augmented reality content at a location defined relative to said one or more updated location data points.

In one or more examples, during said temporal interruption, the apparatus is configured to provide for interruption in the presentation of said augmented reality content.

In one or more examples, the apparatus comprises means configured to provide for a function different to said presentation of augmented reality content during said temporal interruption.

In one or more examples, the one or more location data points of the first tracking information define a substantially horizontally aligned plane for generation of the augmented reality scene at locations defined relative to said plane.

In one or more examples, the apparatus comprises means, prior to and subsequent to said temporal interruption, configured to determine said first tracking information and said updated first tracking information based on (i) the location of the one or more visual features in the captured visual imagery from the first camera and (ii) the location of said at least a subset of the one or more visual features in captured visual imagery from the second camera.

In one or more examples, the second tracking information comprises a subset of the one or more location data points determined based on the location of said subset of said one or more visual features, the subset of location data points corresponding to said subset of visual features.

In one or more examples, the augmented reality content comprises augmented reality game content, wherein a game represented by the augmented reality game content is configured to progress despite the apparatus being configured to provide for interruption in the presentation of said augmented reality game content.

In one or more examples, the first tracking information represents a model of the real-world scene.

In one or more examples, the apparatus comprises part of an augmented reality apparatus that also includes said first camera, and wherein the second camera is remote from the augmented reality apparatus.

In a further aspect there is provided a method, the method comprising:
based on first tracking information comprising one or more location data points determined based on the location of one or more visual features in captured visual imagery of a real-world scene obtained prior to a temporal interruption in the determination of the first real-world tracking information, the captured visual imagery captured by a first camera, the first tracking information provided for generation of an augmented reality scene; and
based on second tracking information comprising at least an indication of changes, during the temporal interruption, in one or more of location and appearance of at least a subset of the one or more visual features in captured visual imagery of said real-world scene from a second camera, different to the first camera;
providing for determination of updated first tracking information having updated location data points based on the first tracking information and the changes indicated in the second tracking information for use in generation of the augmented reality scene.

In one or more examples, based on augmented reality content comprising at least visual content and the first real-world tracking information, the method comprises providing for presentation, prior to said temporal interruption, of said augmented reality scene comprising said visual imagery presented at a location defined relative to said one or more location data points, and subsequent to said temporal interruption, providing for presentation of said visual imagery of said augmented reality content at a location defined relative to said one or more updated location data points.

In a further aspect there is provided a computer readable medium comprising computer program code stored thereon, the computer readable medium and computer program code being configured to, when run on at least one processor, perform the method of:
based on first tracking information comprising one or more location data points determined based on the location of one or more visual features in captured visual imagery of a real-world scene obtained prior to a temporal interruption in the determination of the first real-world tracking information, the captured visual imagery captured by a first camera, the first tracking information provided for generation of an augmented reality scene; and
based on second tracking information comprising at least an indication of changes, during the temporal interruption, in one or more of location and appearance of at least a subset of the one or more visual features in captured visual imagery of said real-world scene from a second camera, different to the first camera;
providing for determination of updated first tracking information having updated location data points based on the first tracking information and the changes indicated in the second tracking information for use in generation of the augmented reality scene.

In a further example aspect there is provided an apparatus comprising:
at least one processor; and
at least one memory including computer program code,
the at least one memory and the computer program code configured to, with the at least one processor, cause the apparatus to perform at least the following:
   based on first tracking information comprising one or more location data points determined based on the location of one or more visual features in captured visual imagery of a real-world scene obtained prior to a temporal interruption in the determination of the first real-world tracking information, the captured visual imagery captured by a first camera, the first tracking information provided for generation of an augmented reality scene; and
   based on second tracking information comprising at least an indication of changes, during the temporal interruption, in one or more of location and appearance of at least a subset of the one or more visual features in captured visual imagery of said real-world scene from a second camera, different to the first camera;
provide for determination of updated first tracking information having updated location data points based on the first tracking information and the changes indicated in the second tracking information for use in generation of the augmented reality scene.

The present disclosure includes one or more corresponding aspects, examples or features in isolation or in various combinations whether or not specifically stated (including claimed) in that combination or in isolation. Corresponding means and corresponding functional units (e.g., function enabler, AR/VR graphic renderer, display device) for performing one or more of the discussed functions are also within the present disclosure.

Corresponding computer programs for implementing one or more of the methods disclosed are also within the present disclosure and encompassed by one or more of the described examples.

The above summary is intended to be merely exemplary and non-limiting.

### Brief Description of the Figures

A description is now given, by way of example only, with reference to the accompanying drawings, in which:
figure 1 illustrates an example apparatus for providing for determination of updated first real-world tracking information;
figure 2 shows an example real-world scene having augmented reality content visual imagery displayed alongside real-world objects present in the scene;
figure 3 shows an example temporal interruption in the determination of the first tracking information and the determination of second tracking information;
figure 4 shows an example of one of the real-world features used in the determination of the first tracking information moving during the temporal interruption;
figure 5 shows the example real-world scene subsequent to the temporal interruption in which the updated first tracking information has been determined;
figure 6 shows a flowchart illustrating an example method; and
figure 7 shows an example computer readable medium.

### Description of Example Aspects

Augmented reality (AR) may use an AR display, such as glasses or goggles or a virtual retinal display, to augment a view of the real world (such as seen through the glasses or goggles) with computer generated content. An augmented reality apparatus, which may or may not include an AR display, may provide for presentation of multimedia AR content configured to be overlaid over the user's view of the real-world. Thus, a user of augmented reality may be able to view the real-world environment around them, which is augmented or supplemented with content provided by the augmented reality apparatus, which may be overlaid on their view of the real world and/or aurally overlaid over an aural real-world scene they can hear. The content may comprise multimedia content such as pictures, photographs, video, diagrams, textual information, aural content among others. An AR apparatus may define an AR space comprising a virtual three-dimensional space in which to position the AR content. The location and orientation of the AR space may be configured to be defined relative to the real world such that virtual objects, such as imagery or audio sources, can be positioned in the real world.

The augmented reality content may comprise, and an AR apparatus presenting said AR content may provide, predefined-viewing-location AR or free-viewing-location AR. In predefined-viewing-location AR, the AR content only allows for viewing from a particular direction. Accordingly, a user may be free to change their viewing direction with respect to the augmented reality content provided for display around them, but they may not be able to see the AR content from a different viewing angle.

In free-viewing-location AR, the AR content and AR apparatus presenting said AR content may enable a user to be free to explore the space they are in and view the AR content from different viewing angles. The visual imagery of the AR content may therefore comprise three-dimensional models that may be rendered from different viewing angles depending on the user's location. Free-viewing-location AR is also known as six degrees of freedom (6DoF) AR to those skilled in the art.

Mixed reality is similar to augmented reality and includes the use of a three-dimensional model of the real-world environment to enable virtual objects, including visual and audio objects, to appear to interact with real-world objects in terms of one or more of their movement, presentation (e.g. audible presentation) and appearance. Mixed reality may be considered as a type of augmented reality.

One or more examples described herein relate to 6DoF augmented or mixed reality content in which the user is at least substantially free to move by user-input through physically moving or, for example, via a dedicated user interface (Ul).

Spatial audio comprises audio presented in such a way to a user that it is perceived to originate from a particular location, as if the source of the audio was located at that particular location. Thus, augmented reality content may be provided with spatial audio having directional properties, such that the audio is perceived to originate from a point in an AR space, which may be linked to the imagery of the AR content. With augmented or mixed reality content the spatial audio may be perceived as originating from real world objects visible to the user and/or from augmented reality graphics overlaid over the user's view.

Spatial audio may be presented independently of visual augmented reality content. Nevertheless, spatial audio, in some examples, may be considered to be augmented reality content because it augments the aural scene perceived by a user. As an example of independent presentation of spatial audio, a user may wear headphones and, as they explore the real world, they may be presented with spatial audio such that the audio appears to originate at particular locations associated with real world objects or locations. For example, a city tour could be provided by a device that tracks the location of the user in the city and presents audio describing points of interest as spatial audio such that the audio is perceived to originate from the point of interest around the user's location. One or more of the embodiments described herein may present spatial audio.

The spatial positioning of the spatial audio may be provided by 3D audio effects, such as those that utilise a head related transfer function to create a spatial audio space in which audio can be positioned for presentation to a user. Spatial audio may be presented by headphones by using head-related-transfer-function (HRTF) filtering techniques or, for loudspeakers, by using vector-base-amplitude panning techniques to position the perceived aural origin of the audio content. In other embodiments ambisonic audio presentation may be used to present spatial audio. Spatial audio may use one or more of volume differences, timing differences and pitch differences between audible presentation to each of a user's ears to create the perception that the origin of the audio is at a particular location in space. The perceived distance to audio may be rendered by controlling the amount of reverberation and gain to indicate closeness or distance from the perceived source of the spatial audio.

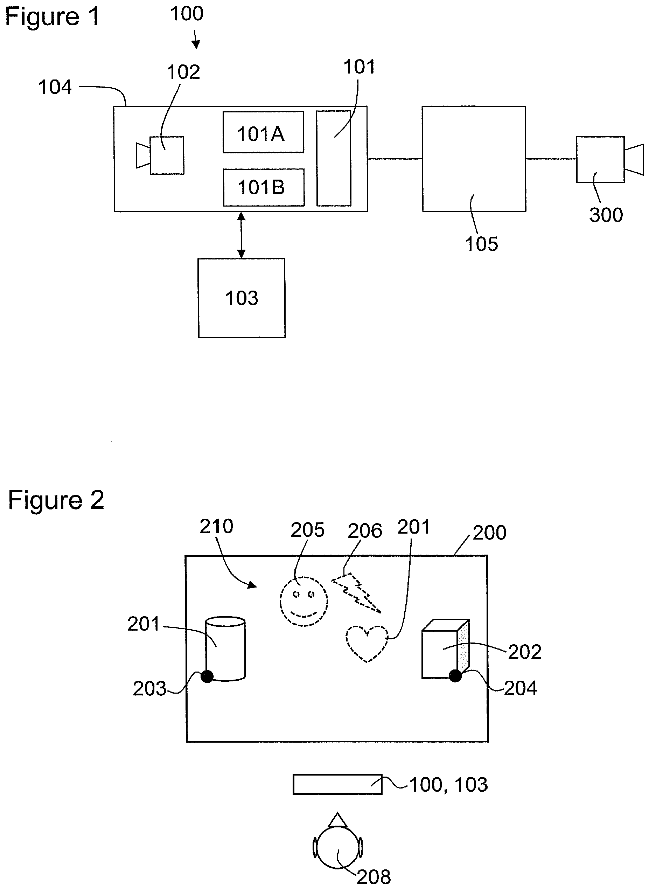

Figure 1 shows an example system 100 for presentation of augmented reality content to a user 208 (shown in figure 2). The system 100 includes an example apparatus 101 for determining updated first tracking information after a temporal interruption in the determination of first tracking information based on second tracking information. A temporal interruption may comprise an interruption for a period of time in which the first tracking information in not obtained, in full or in part, which may occur due to the apparatus that determines the first tracking information being used, temporarily, for a different purpose, as will be described in more detail below.

The apparatus 101 may comprise or be connected to a processor 101A and a memory 101B and may be configured to execute computer program code. The apparatus 101 may have only one processor 101A and one memory 101B but it will be appreciated that other embodiments may utilise more than one processor and/or more than one memory (e.g. same or different processor/memory types). Further, the apparatus 101 may be an Application Specific Integrated Circuit (ASIC).

The processor may be a general purpose processor dedicated to executing/processing information received from other components, such as from a first camera 102 and a content store of augmented reality content (not shown), in accordance with instructions stored in the form of computer program code in the memory. The output signalling generated by such operations of the processor is provided onwards to further components, such as to an augmented reality presentation device 103 associated with a user.

The memory 101B (not necessarily a single memory unit) is a computer readable medium (solid state memory in this example, but may be other types of memory such as a hard drive, ROM, RAM, Flash or the like) that stores computer program code. This computer program code stores instructions that are executable by the processor, when the program code is run on the processor. The internal connections between the memory and the processor can be understood to, in one or more example embodiments, provide an active coupling between the processor and the memory to allow the processor to access the computer program code stored on the memory.

In this example, the respective processors and memories are electrically connected to one another internally to allow for electrical communication between the respective components. In this example, the components are all located proximate to one another so as to be formed together as an ASIC, in other words, so as to be integrated together as a single chip/circuit that can be installed into an electronic device. In some examples one or more or all of the components may be located separately from one another.

The apparatus 101, in this example, forms part of a computing device 104, such as a smart phone, for presenting augmented reality or mixed reality content using the presentation device 103. In one or more other examples, the apparatus 101 may form part of an AR apparatus. In one or more examples, the apparatus 100 may be part of a mixed reality apparatus. In this example, the processor 101 A and memory 101B is shared by the computing device 104 and the apparatus 101, but in other examples, they may have their own processors and/or memory.

The presentation device 103 may comprise a visual display and/or an audio presentation device for presentation of augmented reality content comprising visual imagery and/or spatial audio. The presentation device 103, in this example, may comprise AR glasses having headphones associated therewith. The device 104 or the device 104 under the control of the apparatus 101 may provide for display of the augmented reality content comprising one or more of visual imagery and spatial audio presented in a virtual space for a user using the presentation device 103.

In one or more examples and with reference to figures 1 and 2, the apparatus 101 may provide for determination of first tracking information comprising one or more location data points to provide a spatial reference for generation of an augmented reality scene from augmented reality content. The one or more location data points may define a substantially horizontally aligned plane for generation of the augmented reality scene at locations defined relative to said plane. In one or more examples, the first tracking information represents a model of a real-world scene 200.

Example figure 2 shows the user 208 viewing a real-world scene 200 through the presentation device 103. The real-world scene 200, in one or more examples, may comprise two features, which in this example are first and second objects 201 and 202. It will be appreciated that any number of features may be present in the real-world scene 200 and may be selected for determination of location data points. In one or more examples, the features may comprise objects, walls, a floor, a ceiling of a room, points of colour, colour contrast or light-dark contrast or any other feature that may appear in visual imagery. The location data points may comprise a location derived from the feature identified in the visual imagery. Thus, for example, a location data point may be based on the top, bottom, edge or centre of an object, or a corner of the room or a boundary, or an inflection point along a linear feature or any other identifiable point based on the feature. In this example, location data points 203, 204 are derived based on base/corners of the objects 201, 202. In other examples, a different number of location data points may be determined using one or more features.

The location data points may thus be based on features that are identified in camera visual imagery of the real-world scene 200 from the camera 102. A visual recognition apparatus may be provided to perform the visual processing required to identify features, such as objects 201 and 202, and the location data points therefrom. In one or more examples, the device 102 or the apparatus 101 may perform the function of such a visual recognition apparatus. Thus, in summary, in one or more examples, the device 104 or other apparatus may provide for generation of first tracking information or, alternatively, the apparatus 101 may provide for generation of the first tracking information based on the visual imagery from the camera 102.

The first tracking information may provide a spatial reference to enable "virtual objects" 205, 206, 207 comprising the visual imagery and spatial audio of augmented reality content to be placed, virtually, in the scene 200, such as amongst real world objects 201, 202. Accordingly, an augmented reality scene 210 may be presented in the real-world scene 200. The augmented reality content may therefore be presented such that it is perceived at specific locations in the real world using the location data points as reference points. In the example figure 2 three virtual objects 205, 206, 207 comprising visual imagery are shown. However, it will be appreciated that the augmented reality content for display may include a fewer or greater number of virtual objects and may include spatial audio for presentation so that it is perceived as originating from a particular location in the real-world scene 200.

If the determination of the first tracking information is interrupted for a "temporal interruption" time period, the features 201, 202 in the scene 200 used to generate the location data points, and therefore the tracking information, may change making resumption of the determination of the first tracking information problematic. Changes may include movement of the identified features 201, 202; orientation changes of the identified features 201, 202; lighting changes may make the identification of the feature(s) 201, 202 in the captured visual imagery more difficult; real world objects that may be added to the scene 200 during the interruption may obscure the identified features 201, 202 or make them more difficult for an automated process to identify. It will be appreciated that there could be any number of changes that may occur that may result in the resumption of the determination of the first tracking information more difficult.

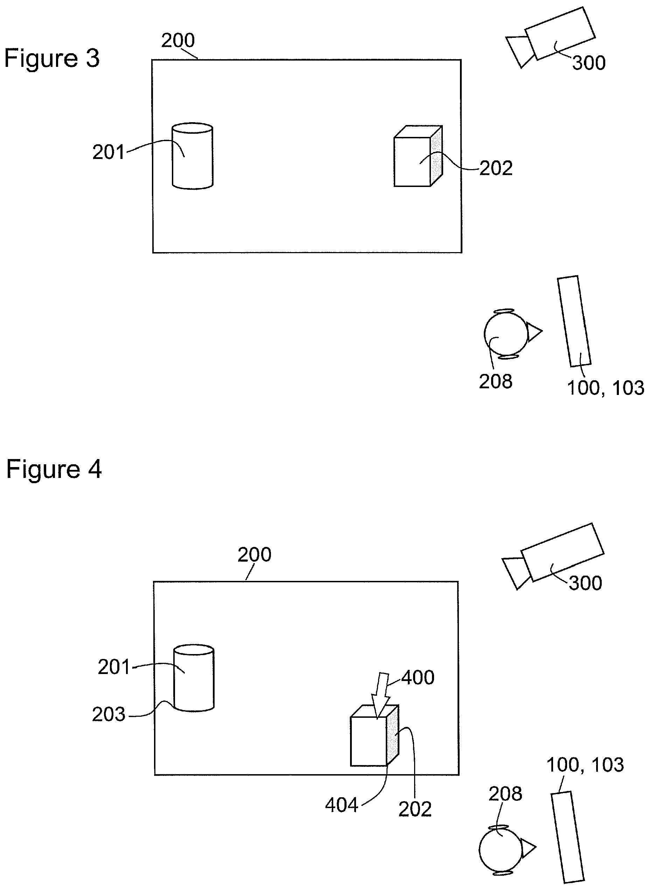

Example figure 3 shows an example of a temporal interruption in which the user 208 has moved away from the scene 200. As the first tracking information was derived from a first camera 102 of the device 104, there is a temporal interruption in the determination of the first real-world tracking information. It will be appreciated that even in examples where the first camera 102 is not part of the device 104 and may continue to point towards the scene 200, a temporal interruption may occur if the apparatus/device determining the first tracking information from the captured camera imagery is interrupted. In one or more examples, the temporal interruption may be caused by the user 208 using the device 200 for a different purpose, such as to conduct a video call or audio call or check their email. In general, the apparatus 101 and or device 104 may be configured to provide for a function different to said presentation of augmented reality content or the determination of the first tracking information during said temporal interruption.

Example figure 3 shows a second camera 300 which is configured to capture visual imagery of the same real-world scene 200. Figure 1 also shows the second camera 300. The second camera 300, in one or more examples, may be coupled to the device 104 (or apparatus 101 in other embodiments) via a processing apparatus 105. The processing apparatus 105 may perform a similar function to the visual recognition apparatus discussed above. Accordingly, the processing apparatus 105 may be configured to provide the apparatus 101, at least in part, with second tracking information based on visual imagery from the second camera 300. The processing apparatus 105 may be configured to identify features in the visual imagery, determine the location data points and/or identify changes in the features and/or location data points. In one or more examples, the processing device 105 may not be present and the device 104 or apparatus 101 or a combination thereof may perform the function of the processing device based on the captured visual imagery received from the second camera 300. The apparatus may be configured to initiate the determination of second tracking information using the imagery from the second camera 300 during the temporal interruption, while the first camera 102 may not be directed towards the scene 200. The apparatus may be configured to initiate the use of the imagery from the second camera 300 to provide second tracking information by providing information about one or more of the scene 200, features 201, 202 and data points 203, 204 to the processing apparatus 105, as will be described in more detail below.

The second camera 300 may be remote from the first camera 102. The second camera 300 may be part of a physically separate apparatus or device. The second camera 300 has a view that at least partly includes the scene 200, captured by the first camera 102.

Example figure 4 shows a change 400 in the scene 200, the change affecting at least one of the features 201, 202 or location of one or more of the location data points of the first tracking information. In particular, the second object 202 has been moved. Accordingly, when the device or apparatus 104, 101 attempts to resume determination of the first tracking information using the same features 201, 202 captured by the camera 201 there may be one or more errors. For example, the apparatus may have difficulty in identifying the same features 201, 202. In another example, because the feature 202 has moved, the augmented reality scene 210 may be rendered differently, such as with a different orientation, which may be undesirable or other errors caused by the change 400 may occur.

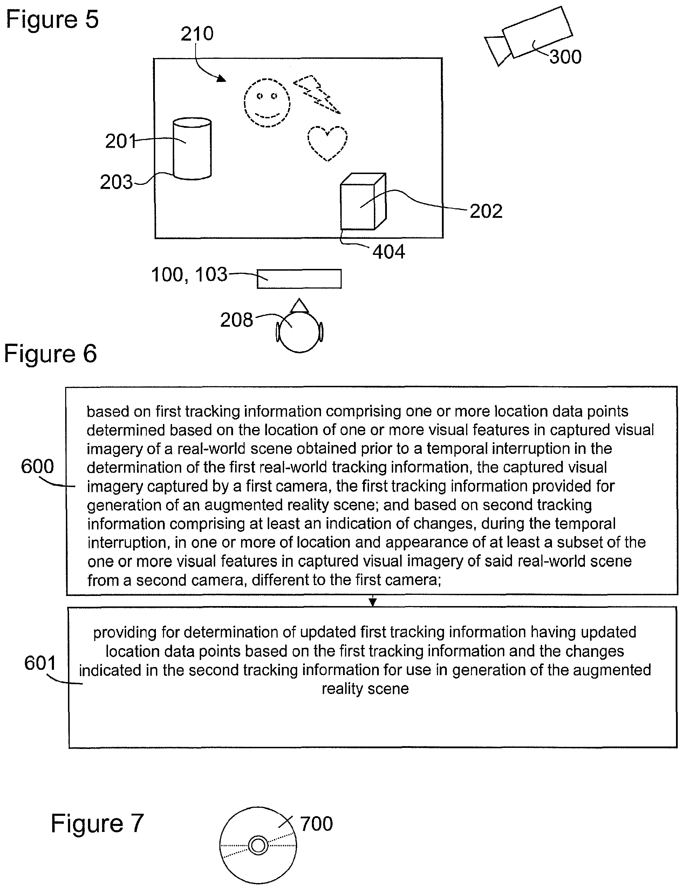

Example figure 5 shows the device 200 or apparatus 101 resume the presentation of the augmented reality content after the temporal interruption and resume the determination of the first tracking information to provide for presentation of said augmented reality content with its previous positioning in the scene 200. Accordingly, in this example, the user 208 has returned to the scene 200 such that the first camera 102 can recommence the capture of visual imagery of the scene 200 for determination of the first tracking information. The apparatus 101, in providing for said continued determination of the first tracking information, may be configured to determine updated first tracking information based on the second tracking information derived from the visual imagery of the second camera 300. With the updated first tracking information providing an initial data set of the location data points, the determination of first tracking information may be continued after the temporal interruption.

Thus, the apparatus 101 may be configured to receive the following information:
(i) first tracking information comprising one or more location data points 203, 204 determined based on the location of one or more visual features 201, 202 in captured visual imagery of the real-world scene 200 obtained prior to a temporal interruption (shown in figures 3 and 4) in the determination of the first tracking information, the captured visual imagery captured by the first camera 102; and
(ii) second tracking information comprising at least an indication of changes 400, during the temporal interruption, in one or more of location and appearance in the real-world scene 200 of at least a subset (object 202) of the one or more visual features (two objects 201, 202 in this example) in captured visual imagery from the second camera 300.

The apparatus 101 may therefore provide for determination of the updated first tracking information having updated location data points 203, 204 based on the first tracking information and the change(s) 400 indicated in the second tracking information for use in generation of the augmented reality scene 210.

In one or more examples, the apparatus 101 may only be configured to determine the updated first real-world tracking information. In one or more other examples, the apparatus 101 may be configured to also determine one or both of the first tracking information prior to the temporal interruption and the second tracking information. Thus, the apparatus 101 may be configured, prior to and subsequent to said temporal interruption, to determine said first tracking information and determine said updated real-world tracking information based on (i) the location of the one or more visual features in the captured visual imagery from the first camera 102 and the location data point(s) therefrom and (ii) the location of said at least a subset of the one or more visual features 201, 202 and corresponding location data points in captured visual imagery from the second camera 300.

In one or more examples, the apparatus 101 may be configured to provide for display of the augmented reality content based on one or more of the first, second or updated first tracking information.

Thus, in one or more examples, the apparatus 101 may be, based on augmented reality content comprising at least one of visual content and spatial audio content and the first tracking information, configured to provide for presentation, prior to said temporal interruption, of said augmented reality scene 210 comprising said visual imagery 205, 206, 207 (or spatial audio) at a location defined relative to said one or more location data points 203, 204, and subsequent to said temporal interruption, provide for presentation of said visual imagery 205, 206, 207 of said augmented reality content at a location defined relative to said one or more updated location data points 203, 404.

In one or more examples, the second camera 300 may be configured to capture visual imagery of the scene 200 irrespective of any temporal interruptions in operation of the apparatus 101 or device 104 in capturing the scene 200. In other examples, the occurrence of the temporal interruption may be used to prompt the second camera 300 to begin capturing the visual imagery of the scene 200.

Accordingly, the apparatus 101 may be configured to provide for initiation of tracking of said changes by the second camera 300 based on signalling indicative of the onset of the temporal interruption. The signalling indicative of the onset of the temporal interruption may comprise the receipt of a call or message by the device 104 that the user may wish to view. In other examples the signalling may comprise a user input or a user input to exit or pause an augmented reality presentation application which comprises software for the provision of display of the augmented reality scene 210.

In one or more examples, the features in the scene 210 used to generate the first tracking information may be communicated to the processing apparatus 105 for determination of the second tracking information. Thus, the apparatus 101 may be configured to provide visual feature information that identifies at least the subset of visual features or location data point thereof in the captured visual imagery of the real-world scene 200 captured by the first camera 102, for use in generation of the second tracking information using the captured visual imagery of the second camera 300. The visual feature information may identify the objects so that they can be automatically identified in the visual imagery from the second camera 300. The visual feature information may comprise the location data points 203, 204 of the first tracking information and may therefore identify the features 201, 202 by reference to said location data points. In other examples, the processing apparatus 105 may be configured to track changes 400 to many objects in the scene 200 and the apparatus 101 may be configured to select the changes indicated in the second tracking information that are relevant for the generation of the updated first real-world tracking information.

The second tracking information may take various forms, and, in one or more examples, it may comprise details of changes 400 in the first real-world tracking information. In one or more examples, the second tracking information may provide current coordinates for one or both of the features 201, 202 and the location data points derived from the features 201, 202. In one or more examples, it may provide a subset or all of the one or more location data points determined based on the location of said subset or all of said one or more visual features.

As mentioned above, the apparatus 101 and/or the device 104 may be configured to provide for display of the augmented reality content to generate the scene 210. In one or more examples, the apparatus 101 is configured to provide for interruption in the presentation of said augmented reality content during the temporal interruption in which the first tracking information is not being determined. Thus, the display of the AR content on the presentation device 103 may be temporarily stopped by the apparatus 101 or by the apparatus 101 providing appropriate signalling to the device 104.

The augmented reality content that uses the first tracking information for its display to augment the scene 200 may comprise an augmented reality guide or movie or game. More generally, the augmented reality content may comprise visual imagery and/or spatial audio content that progresses and may therefore change over time. Accordingly, during the temporal interruption, the elapsed time point through the augmented reality content may be paused. However, in other examples, the "time progressive" augmented reality content may continue despite the temporal interruption. As an example, for augmented reality content of mixed reality type, the virtual objects 205, 206, 207 may interact with the real-world objects 201, 202, such as by bouncing off them or colliding with them. Without the second camera 300, the interruption in the determination of the first tracking information may fundamentally stop the presentation of such content. However, with the determination of the second tracking information from visual imagery captured by the second camera 300, the presentation of the augmented reality content may continue.

Figure 6 shows a flow diagram illustrating the steps of:
based on 600 first tracking information comprising one or more location data points determined based on the location of one or more visual features in captured visual imagery of a real-world scene obtained prior to a temporal interruption in the determination of the first real-world tracking information, the captured visual imagery captured by a first camera, the first tracking information provided for generation of an augmented reality scene; and based on second tracking information comprising at least an indication of changes, during the temporal interruption, in one or more of location and appearance of at least a subset of the one or more visual features in captured visual imagery of said real-world scene from a second camera, different to the first camera;
providing 601 for determination of updated first tracking information having updated location data points based on the first tracking information and the changes indicated in the second tracking information for use in generation of the augmented reality scene.

The method may include an additional step of, based on augmented reality content comprising at least visual content and the first real-world tracking information, the method comprises providing for presentation, prior to said temporal interruption, of said augmented reality scene comprising said visual imagery presented at a location defined relative to said one or more location data points, and subsequent to said temporal interruption, providing for presentation of said visual imagery of said augmented reality content at a location defined relative to said one or more updated location data points.

Figure 7 illustrates schematically a computer/processor readable medium 700 providing a program according to an example. In this example, the computer/processor readable medium is a disc such as a digital versatile disc (DVD) or a compact disc (CD). In some examples, the computer readable medium may be any medium that has been programmed in such a way as to carry out an inventive function. The computer program code may be distributed between the multiple memories of the same type, or multiple memories of a different type, such as ROM, RAM, flash, hard disk, solid state, etc.

User inputs may be gestures which comprise one or more of a tap, a swipe, a slide, a press, a hold, a rotate gesture, a static hover gesture proximal to the user interface of the device, a moving hover gesture proximal to the device, bending at least part of the device, squeezing at least part of the device, a multi-finger gesture, tilting the device, or flipping a control device. Further the gestures may be any free space user gesture using the user's body, such as their arms, or a stylus or other element suitable for performing free space user gestures.

The apparatus 101 shown in the above examples may be a portable electronic device, a laptop computer, a mobile phone, a Smartphone, a tablet computer, a personal digital assistant, a digital camera, a smartwatch, smart eyewear, a pen based computer, a non-portable electronic device, a desktop computer, a monitor, a smart TV, a server, a wearable apparatus, a virtual reality apparatus, or a module/circuitry for one or more of the same.

Any mentioned apparatus and/or other features of particular mentioned apparatus may be provided by apparatus arranged such that they become configured to carry out the desired operations only when enabled, e.g. switched on, or the like. In such cases, they may not necessarily have the appropriate software loaded into the active memory in the non-enabled (e.g. switched off state) and only load the appropriate software in the enabled (e.g. on state). The apparatus may comprise hardware circuitry and/or firmware. The apparatus may comprise software loaded onto memory. Such software/computer programs may be recorded on the same memory/processor/functional units and/or on one or more memories/processors/ functional units.

In some examples, a particular mentioned apparatus may be pre-programmed with the appropriate software to carry out desired operations, and wherein the appropriate software can be enabled for use by a user downloading a "key", for example, to unlock/enable the software and its associated functionality. Advantages associated with such examples can include a reduced requirement to download data when further functionality is required for a device, and this can be useful in examples where a device is perceived to have sufficient capacity to store such pre-programmed software for functionality that may not be enabled by a user.

Any mentioned apparatus/circuitry/elements/processor may have other functions in addition to the mentioned functions, and that these functions may be performed by the same apparatus/circuitry/elements/processor. One or more disclosed aspects may encompass the electronic distribution of associated computer programs and computer programs (which may be source/transport encoded) recorded on an appropriate carrier (e.g. memory, signal).

Any "computer" described herein can comprise a collection of one or more individual processors/processing elements that may or may not be located on the same circuit board, or the same region/position of a circuit board or even the same device. In some examples one or more of any mentioned processors may be distributed over a plurality of devices. The same or different processor/processing elements may perform one or more functions described herein.

The term "signalling" may refer to one or more signals transmitted as a series of transmitted and/or received electrical/optical signals. The series of signals may comprise one, two, three, four or even more individual signal components or distinct signals to make up said signalling. Some or all of these individual signals may be transmitted/received by wireless or wired communication simultaneously, in sequence, and/or such that they temporally overlap one another.

With reference to any discussion of any mentioned computer and/or processor and memory (e.g. including ROM, CD-ROM etc), these may comprise a computer processor, Application Specific Integrated Circuit (ASIC), field-programmable gate array (FPGA), and/or other hardware components that have been programmed in such a way to carry out the inventive function.

The applicant hereby discloses in isolation each individual feature described herein and any combination of two or more such features, to the extent that such features or combinations are capable of being carried out based on the present specification as a whole, in the light of the common general knowledge of a person skilled in the art, irrespective of whether such features or combinations of features solve any problems disclosed herein, and without limitation to the scope of the claims. The applicant indicates that the disclosed aspects/examples may consist of any such individual feature or combination of features. In view of the foregoing description it will be evident to a person skilled in the art that various modifications may be made within the scope of the disclosure.

While there have been shown and described and pointed out fundamental novel features as applied to examples thereof, it will be understood that various omissions and substitutions and changes in the form and details of the devices and methods described may be made by those skilled in the art without departing from the scope of the disclosure. For example, it is expressly intended that all combinations of those elements and/or method steps which perform substantially the same function in substantially the same way to achieve the same results are within the scope of the disclosure. Moreover, it should be recognized that structures and/or elements and/or method steps shown and/or described in connection with any disclosed form or examples may be incorporated in any other disclosed or described or suggested form or example as a general matter of design choice. Furthermore, in the claims means-plus-function clauses are intended to cover the structures described herein as performing the recited function and not only structural equivalents, but also equivalent structures. Thus, although a nail and a screw may not be structural equivalents in that a nail employs a cylindrical surface to secure wooden parts together, whereas a screw employs a helical surface, in the environment of fastening wooden parts, a nail and a screw may be equivalent structures.

## Claims

1. An apparatus comprising means configured to perform the following:
based on first tracking information comprising one or more location data points determined based on the location of one or more visual features in captured visual imagery of a real-world scene obtained prior to a temporal interruption in the determination of the first real-world tracking information, the captured visual imagery captured by a first camera, the first tracking information provided for generation of an augmented reality scene; and
based on second tracking information comprising at least an indication of changes, during the temporal interruption, in one or more of location and appearance of at least a subset of the one or more visual features in captured visual imagery of said real-world scene from a second camera, different to the first camera;
provide for determination of updated first tracking information having updated location data points based on the first tracking information and the changes indicated in the second tracking information for use in generation of the augmented reality scene.

2. The apparatus of claim 1, wherein the apparatus comprises means configured, based on signalling indicative of the onset of the temporal interruption, to provide for initiation of tracking of said changes from the captured visual imagery of the second camera in order to provide the second tracking information.

3. The apparatus of claim 1 or claim 2, wherein the apparatus comprises means configured to provide visual feature information that identifies at least the subset of visual features in the captured visual imagery of a real-world scene captured by the first camera, for use in generation of the second tracking information using the captured visual imagery of the second camera.

4. The apparatus of any preceding claim, wherein based on augmented reality content comprising at least visual content, and the first tracking information, the apparatus comprises means configured to provide for presentation, prior to said temporal interruption, of said augmented reality scene comprising said visual imagery presented at a location defined relative to said one or more location data points, and subsequent to said temporal interruption, provide for presentation of said visual imagery of said augmented reality content at a location defined relative to said one or more updated location data points.

5. The apparatus of claim 4, wherein during said temporal interruption, the apparatus is configured to provide for interruption in the presentation of said augmented reality content.

6. The apparatus of claim 4 or claim 5, wherein the apparatus comprises means configured to provide for a function different to said presentation of augmented reality content during said temporal interruption.

7. The apparatus of any preceding claim wherein the one or more location data points of the first tracking information define a substantially horizontally aligned plane for generation of the augmented reality scene at locations defined relative to said plane.

8. The apparatus of any preceding claim wherein the apparatus comprises means, prior to and subsequent to said temporal interruption, configured to determine said first tracking information and said updated first tracking information based on (i) the location of the one or more visual features in the captured visual imagery from the first camera and (ii) the location of said at least a subset of the one or more visual features in captured visual imagery from the second camera.

9. The apparatus of any preceding claim, wherein the second tracking information comprises a subset of the one or more location data points determined based on the location of said subset of said one or more visual features, the subset of location data points corresponding to said subset of visual features.

10. The apparatus of claim 5, wherein the augmented reality content comprises augmented reality game content, wherein a game represented by the augmented reality game content is configured to progress despite the apparatus being configured to provide for interruption in the presentation of said augmented reality game content.

11. The apparatus of any preceding claim, wherein the first tracking information represents a model of the real-world scene.

12. The apparatus of any preceding claim, wherein the apparatus comprises part of an augmented reality apparatus that also includes said first camera, and wherein the second camera is remote from the augmented reality apparatus.

13. A method, the method comprising:
based on first tracking information comprising one or more location data points determined based on the location of one or more visual features in captured visual imagery of a real-world scene obtained prior to a temporal interruption in the determination of the first real-world tracking information, the captured visual imagery captured by a first camera, the first tracking information provided for generation of an augmented reality scene; and
based on second tracking information comprising at least an indication of changes, during the temporal interruption, in one or more of location and appearance of at least a subset of the one or more visual features in captured visual imagery of said real-world scene from a second camera, different to the first camera;
providing for determination of updated first tracking information having updated location data points based on the first tracking information and the changes indicated in the second tracking information for use in generation of the augmented reality scene.

14. The method of claim 13, wherein based on augmented reality content comprising at least visual content and the first real-world tracking information, the method comprises providing for presentation, prior to said temporal interruption, of said augmented reality scene comprising said visual imagery presented at a location defined relative to said one or more location data points, and subsequent to said temporal interruption, providing for presentation of said visual imagery of said augmented reality content at a location defined relative to said one or more updated location data points.

15. A computer readable medium comprising computer program code stored thereon, the computer readable medium and computer program code being configured to, when run on at least one processor, perform the method of:
based on first tracking information comprising one or more location data points determined based on the location of one or more visual features in captured visual imagery of a real-world scene obtained prior to a temporal interruption in the determination of the first real-world tracking information, the captured visual imagery captured by a first camera, the first tracking information provided for generation of an augmented reality scene; and
based on second tracking information comprising at least an indication of changes, during the temporal interruption, in one or more of location and appearance of at least a subset of the one or more visual features in captured visual imagery of said real-world scene from a second camera, different to the first camera;
providing for determination of updated first tracking information having updated location data points based on the first tracking information and the changes indicated in the second tracking information for use in generation of the augmented reality scene.
